Europäisches Patentamt

**European Patent Office**

Office européen des brevets

(11) Publication number : **0 459 510 B1**

(12) **EUROPEAN PATENT SPECIFICATION**

(45) Date of publication of patent specification :
22.09.93 Bulletin 93/38

(21) Application number : **91108951.4**

(22) Date of filing : **31.05.91**

(51) Int. Cl.⁵ : **F16L 23/16**

(54) **Metal gasket.**

(30) Priority : **01.06.90 JP 143471/90**

(43) Date of publication of application :
**04.12.91 Bulletin 91/49**

(45) Publication of the grant of the patent :
**22.09.93 Bulletin 93/38**

(84) Designated Contracting States :
**CH DE FR GB LI**

(56) References cited :
**EP-A- 0 260 356
GB-A- 2 221 002
US-A- 3 747 963**

(73) Proprietor : **Japan Atomic Energy Research
Institute
2-2, Uchisaiwaicho 2-chome
Chiyoda-ku, Tokyo (JP)**
Proprietor : **JAPAN VAC'S METAL CO., LTD.
32-15, Yaguchi 2-chome
Ohta-ku, Tokyo (JP)**

(72) Inventor : **Obara, Kenjiro, c/o Naka
Establishment
Japan Atomic Energy Res.Inst. 801-1, Aza
Nakahara
Ohaza Mukaiyama, Nakamachi, Naka-gun (JP)**
Inventor : **Murakami, Yoshio c/o Naka
Establishment
Japan Atomic Res.Inst. 801-1, Aza Nakahara
Ohaza Mukaiyama, Nakamachi, Naka-gun (JP)**
Inventor : **Kiriki, Takao, c/o Japan Vac's Metal
Co.,Ltd.
32-15, Yaguchi 2-chome, Ohta-ku
Tokyo (JP)**

(74) Representative : **Barz, Peter, Dr.
Patentanwälte Dipl.-Ing. G. Dannenberg Dr. P.
Weinhold, Dr. D. Gudel Dipl.-Ing. S. Schubert,
Dr. P. Barz Siegfriedstrasse 8
D-80803 München (DE)**

## Description

The present invention relates to a metal gasket for use in a sealing section of a flange formed with a knife edge in cross section (hereinafter, a knife-edge-type metal-seal flange).

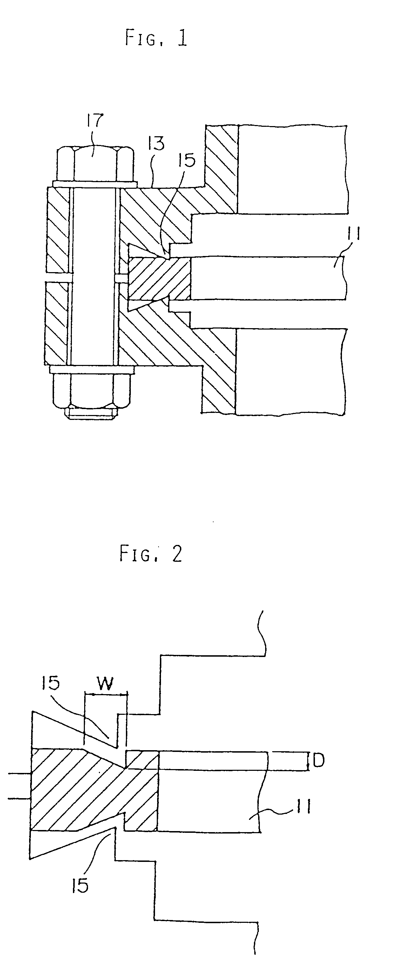

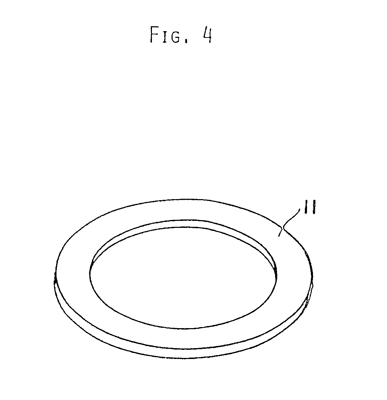

Conventionally, a combination of a stainless steel knife-edge-type metal-seal flange and a plate-shaped ring-type oxygen-free copper gasket as shown in FIG.4 has found frequent use in connection sections to be used for connecting removable vacuum piping and the like. The reason for using a metal gasket in this application is that, in order to quickly remove the gas which is absorbed on the inner walls of the vacuum piping and the like, it is necessary to bake the piping and the like at a temperature of 200°C to 400°C. However, the gasket must also be capable of withstanding these temperatures. FIG.1 is a schematic partial cross-sectional view showing a sealing mechanism which uses a vacuum flange and a metal gasket. The sealing edge 15 of a knife-edge-type metal-seal flange 13 bites into a plate-shaped ring-type gasket 11 as a result of the clamping force of a clamping bolt 17 and the sealing performance is maintained by the development of a surface pressure (the pressure received by the contact surface after the sealing edge contacts the gasket 11) on the contact surface (sealing section).

At this time, a triangular sealing groove with a depth D and a width W, as illustrated in FIG.2, is formed in the contact surface between the sealing edge 15 and the gasket 11 when the sealing edge 15 bites into the gasket 11.

However, with the conventional method in which an oxygen-free copper gasket is used as the gasket 11, a problem occurs because the depth D and the width W of the sealing groove gradually increase during baking at 200°C to 400°C leading to a decrease in the surface pressure and a reduction in sealing performance. In order to prevent this reduction in sealing performance caused by the baking process it is necessary to produce a surface pressure greater than a certain value at the contact surface of the sealing edge 15 and the gasket 11 after baking. Accordingly, at the present time it is necessary to perform the troublesome operation of tightening up the clamping bolt 17 whenever a reduction in sealing performance is perceived, specifically, when a leak is produced, or after the baking has been completed.

Accordingly, an object of the present invention is to provide, with due consideration to the drawbacks of such conventional metal gaskets, a highly reliable plate-shaped ring-type metal gasket for use in a knife-edge-type metal-seal flange, in which there is no loss of sealing performance either during baking or after baking.

This object of the present invention can be attained by reducing the deformation of the sealing groove during baking, thereby preventing a reduction in the sealing pressure produced at the contact surface between the sealing edge and the gasket.

A more complete appreciation of the invention and many of the attendant advantages thereof will be readily obtained as the same becomes better understood by reference to the following detailed description when considered in connection with the accompanying drawings, wherein:

FIG.1 is a schematic partial cross-sectional view showing a seal mechanism which uses a knife-edge-type metal-seal flange and a plate-shaped ring-type gasket;

FIG.2 is a view for explanatory purposes showing a cross section of a sealing groove formed on the gasket as the result of pressure applied by the flange, in which for simplification of the explanation, the flange and the gasket have been separated;

FIG.3 is a graph showing the relationship between the Vickers hardness and the amount of zirconium in the alloy, with temperature as parameters, obtained by actual measurement, when oxygen-free copper was used in the zirconium copper alloy;

FIG.4 is a perspective view showing an embodiment of the plate-shaped ring-type gasket of the present invention;

FIG.5 is a perspective view showing the structure of a test device used with the present invention; and

FIG.6 and FIG.7 are graphs showing the results of measurements of the depth and the width respectively of the sealing grooves formed on the gaskets at various temperatures, for oxygen-free copper gaskets and various zirconium-copper alloy gaskets.

The inventors of the present invention, as a result of close investigations into methods of solving the above-mentioned conventional problems, have ascertained that the cause of the decrease in surface pressure in the sealing section during baking at 200°C to 400°C is the fact that the oxygen-free copper of which the gasket is made softens in this temperature range and a creeping phenomenon occurs.

In order to restrain the deformation of the gasket at high temperatures it is necessary to use a material with a low degree of creep in this temperature range. Ordinarily the creeping phenomenon in a metal material depends on the hardness of the material, therefore, to restrain the deformation of the gasket it is necessary to find a material which only exhibits a small amount of decrease in hardness in the above-mentioned temperature range. On the other hand, in order to cause the knife edge of the flange to bite into the gasket, a suitable degree of hardness is required, and, as a result of the research of the inventors of the present invention, this value has been determined to be a Vickers hardness of 75 to 115.

In the present invention, from the results of tests to evaluate a wide variety of materials it was discovered that when a copper alloy containing zirconium (hereinafter, a zirconium-copper alloy) is used as the gasket material, the sealing edge of the flange bites into the gasket to a suitable degree at room temperature, and the creeping phenomenon caused by a decrease in hardness at high temperatures in the 200°C to 400°C range is small, thereby solving the problems.

In the present invention, by using a zirconium-copper alloy containing 0.01 to 0.2 wt.% of zirconium as the gasket material, it is possible to provide a highly reliable metal gasket with a hardness at room temperature suitable for use with a knife-edge-type metal-seal flange seal and which exhibits only a small decrease in hardness during baking at 200°C to 400°C. As a result, the production of leaks after baking and the like is prevented, and the tightening of the flange which must normally be performed with conventional gaskets becomes unnecessary. These results are extremely promising for the rationalization of operations.

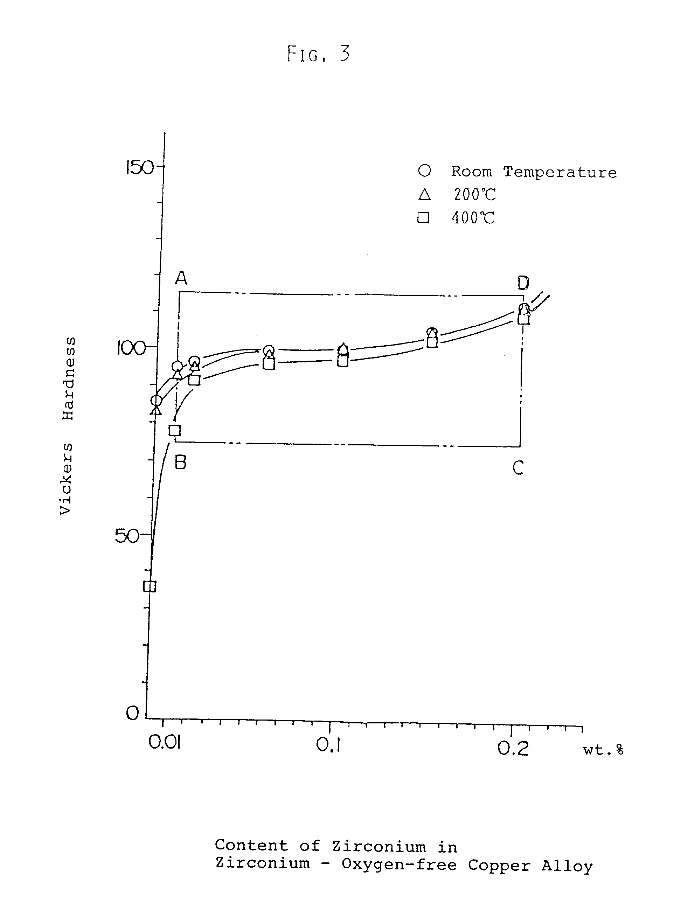

The relationship between the Vickers hardness and the amount of zirconium in the alloy was measured, with temperature as parameters, when oxygen-free copper was used in the zirconium copper alloy. The results are given in FIG.3.

The hardness at room temperature increases with increase in zirconium in the alloy. On observing the temperature-dependence of the hardness it is seen that with oxygen-free copper containing no zirconium the hardness was 5% less than the room temperature hardness at 200°C, and 60% less at 400°C. On the other hand, with the zirconium-copper alloy of a zirconium content of 0.01 wt.% and the balance essentially all copper, the hardness was 2% less than the room temperature hardness at 200°C, and 12% less at 400°C, showing a very small decrease in hardness at high temperature in comparison with oxygen-free copper containing no zirconium.

Furthermore, when the zirconium content of the alloy was increased to 0.2 wt.%, no decrease was observed in the hardness at 200°C, while at 400°C the hardness was only 1% less than at room temperature. Comparisons of Vickers hardness at room temperature and at 400°C are given in Table 1 for oxygen-free copper, and zirconium-copper alloys with 0.01 wt.% zirconium and 0.2 wt.% zirconium respectively.

TABLE 1

| Materials | Vickers Hardness | |
| --- | --- | --- |
| | Room temp. | 400°C |
| Oxygen-free Copper | 86 | 36 |
| 0.01% zirconium | 95 | 78 |
| 0.2% zirconium | 112 | 110 |

However, if the zirconium content of the zirconium-copper alloy exceeds 0.2 wt.%, the material becomes too hard so that the bite of the sealing edge of the flange into the gasket is inadequate.

To summarize, the region contained within the rectangle ABCD in FIG.3 is suitable for the object gasket of the present invention. Specifically, the knife-edge-type metal-seal flange gasket of the present invention is preferably fabricated from a zirconium-copper alloy with a zirconium content in the range of 0.01 wt.% to 0.2 wt.%, which is suitable for baking at a temperature between 200°C and 400°C.

FIG.4 is a perspective view showing an embodiment of the metal gasket of the present invention. The gasket 11 is a plate-shaped ring-type gasket formed from zirconium-copper alloy. The mode of use of the gasket 11 is illustrated in FIG.1, whereby a sealed structure is formed by the sealing edge 15 of the knife-edge-type metal-seal flange 13 biting into the gasket 11 from the clamping effect of the bolt 17.

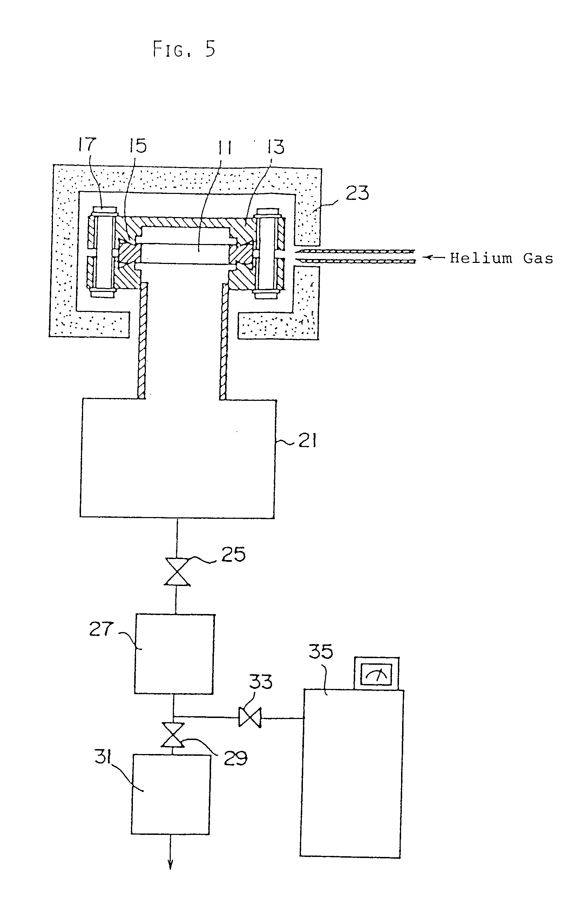

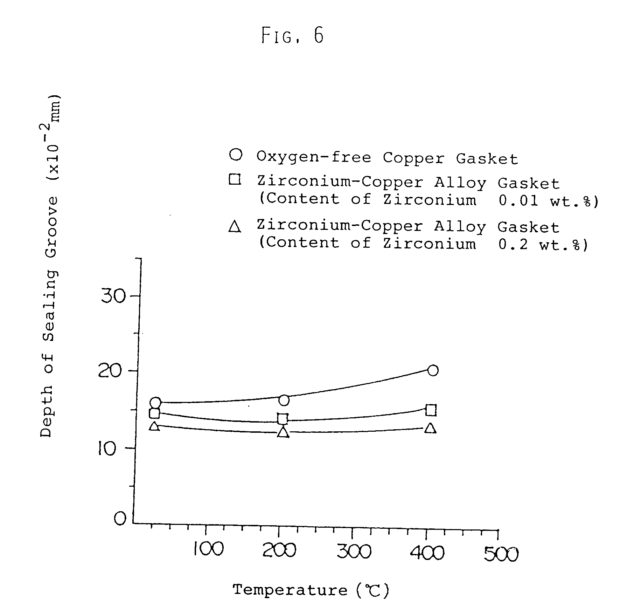

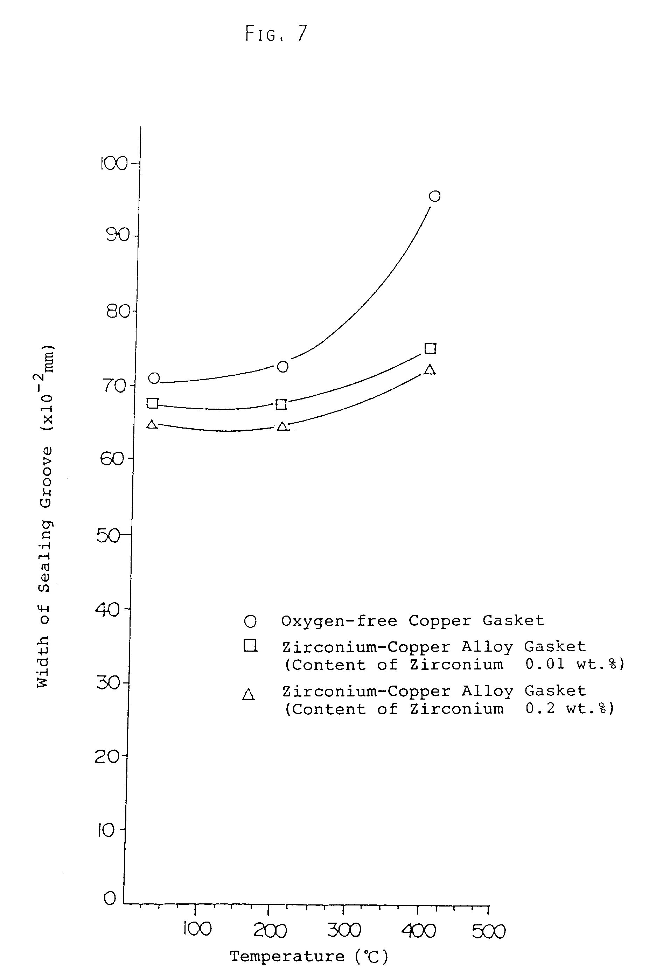

Now referring to FIG.5, there is shown a perspective view showing the structure of a test device used for testing the performance of the gasket 11. The flange section of a vacuum tank 21 is sealed through the gasket 11, and by clamping a clamping screw 17, the sealing edge 15 of the knife-edge-type metal-seal flange 13 forms a sealed structure by biting into the gasket 11. The entire flange section is enclosed by a heater 23 so that the flange section can be baked by using the heater 23. Helium gas is sprayed between the flange section and the heater 23. The interior of the vacuum tank 21 is exhausted by closing a main valve 25 and an auxiliary valve 29, then operating an auxiliary exhaust pump 31. At the stage where a specified degree of vacuum has been attained, a main vacuum pump 27 is operated and a high vacuum is created inside the vacuum tank 21. A branch is provided in the piping ahead of the auxiliary valve 29 and this branch is connected to a helium leak detection apparatus 35 through a valve 33 so that any leak of helium gas through the knife-edge-type metal-seal flange can be detected. The sealing condition and the changes in the depth and the width of the sealing groove formed on the gasket were measured using the above-mentioned test device for gaskets 11 fabricated from oxygen-free copper and from zirconium-copper alloy under the same conditions of clamping force, baking temperature, and holding time. The depths and widths of the sealing grooves formed in the gaskets are shown in FIG.6 and FIG.7 respectively for both oxygen-free copper alloy gaskets and zirconium-copper gaskets. The zirconium-copper alloys as the gasket materials contain 0.01 wt.% to 0.2 wt.% of zirconium, with the balance essentially all copper. Both the depth and the width of the sealing grooves increased with the application of heat in the oxygen-free copper gasket, but the degree of deformation was very small in the gasket made of the zirconium-copper alloy, clearly showing the effectiveness of the gasket of the present invention. In addition, the degree of deformation of the sealing grooves differed according to the zirconium content of the gaskets. The deformation in the 0.01 wt.% material was greater than that in the 0.2 wt.% material. The sealing performance was measured by means of the helium leak detection apparatus 35. At 400°C, leaks were detected in 20 out of 50 test gaskets fabricated from oxygen-free copper. On the other hand, in the zirconium-copper alloy gaskets, for both the 0.01 wt.% zirconium and the 0.2 wt.% zirconium gaskets, no leaks were detected at 400°C in 50 gaskets of each type.

## Claims

1. A plate-shaped ring-type metal gasket for use in a flange which is formed with a knife edge in cross section, comprising a zirconium-copper alloy with a zirconium content in the range of 0.01 wt.% to 0.2 wt.%.

2. The plate-shaped ring-type metal gasket as claimed in Claim 1, wherein the copper of said zirconium-copper alloy is oxygen-free copper.

3. The plate-shaped ring-type metal gasket as claimed in any one of Claims 1 and 2, wherein said zirconium-copper alloy has a Vickers hardness of 75 to 115.

## Patentansprüche

1. Plattenförmige Metallringdichtung zur Verwendung in einem Flansch, der im Querschnitt mit einer Schneidkante gebildet wird, umfassend eine Zirkonium-Kupfer-Legierung mit einem Zirkoniumgehalt im Bereich von 0,01 Gewichtsprozent bis 0,2 Gewichtsprozent.

2. Plattenförmige Metallringdichtung nach Anspruch 1, in welcher das Kupfer der Zirkonium-Kupfer-Legierung sauerstofffreies Kupfer ist.

3. Plattenförmige Metallringdichtung nach irgendeinem der Ansprüche 1 und 2, in welcher die Zirkonium-Kupfer-Legierung eine Vickers-Härte von 75 bis 115 aufweist.

## Revendications

1. Garniture d'étanchéité métallique en forme de plaque de type annulaire, destinée à être utilisée dans une bride qui est pourvue d'une arête de couteau en coupe transversale, comprenant un alliage zirconium-cuivre possédant une teneur en zirconium située dans la gamme allant de 0,01% en poids à 0,2% en poids.

2. Garniture d'étanchéité métallique en forme de plaque de type annulaire selon la revendication 1, dans laquelle le cuivre dudit alliage zirconium-cuivre est du cuivre exempt d'oxygène.

3. Garniture d'étanchéité métallique en forme de plaque de type annulaire selon l'une quelconque des revendications 1 et 2, dans laquelle ledit alliage zirconium-cuivre possède une dureté Vickers de 75 à 115.

FIG. 1

FIG. 2

FIG. 3

Content of Zirconium in
Zirconium - Oxygen-free Copper Alloy

FIG. 4

FIG. 5

FIG. 6

Depth of Sealing Groove ($\times 10^{-2}$mm)

○ Oxygen-free Copper Gasket

□ Zirconium-Copper Alloy Gasket
(Content of Zirconium 0.01 wt.%)

△ Zirconium-Copper Alloy Gasket
(Content of Zirconium 0.2 wt.%)

Temperature (℃)

FIG. 7